# EUROPEAN PATENT APPLICATION

(11) **EP 3 936 269 A1**
(43) Date of publication of application: **12.01.2022**
(21) Application number: 20382615.1
(22) Date of filing: 09.07.2020
(51) Int. Cl.: B23D 37/00, B23D 37/12, B23D 41/08

(54) **OUTER SURFACE BROACHING MACHINE, WITH A FIXED TOOL**

(71) Applicant: EKIN, S.Coop., 48340 Amorebieta (Bizkaia) (ES)
(72) Inventor: OMAECHEBARRIA ELORRIAGA, Francisco Javier, 48340 AMOREBIETA (BIZKAIA) (ES); ETXEBARRIA ETXEBARRIA, Iñaki, 48340 AMOREBIETA (BIZKAIA) (ES)
(74) Representative: Plasseraud IP

(57) **Abstract**

The present invention relates to an outer surface broaching machine, with a fixed tool (7), exhibiting a column (3) along which a workpiece-carrier carriage (1) can be moved. A servomotor (2) is arranged on each end of the workpiece-carrier carriage (1), which by means of a reducer (15) can transmit the rotational movement in both directions to a pinion (16) meshed in a rack (4) arranged along the column (3) of the machine. The workpiece-carrier carriage (1) incorporates skates (8.1) coupled to linear guides (8) equally mounted along the column (3), such that the synchronised actuation of both servomotors (2) establishes the horizontal movement of the carriage (1), with the ends thereof at the same height dimension with respect to the ground.

## Description

### Technical field

The present invention is related to the machine tools referred to as broaching machines and more specifically to those used for machining outer surfaces of workpieces and even more specifically, with those wherein the tool thereof referred to as a broach remains fixed, such that it is the workpiece that moves.

### State of the art

At present vertical broaching machines are known, for outer surface broaching and with a fixed tool, such that the workpiece is mounted on a workpiece-carrier carriage. As described, for example, in Patents US5833411, US649442 and US2003011841. In all these known solutions, the drive means of the workpiece-carrier carriage are arranged in the upper portion of the machine, which carry out the transmission of movement to the workpiece-carrier carriage, either by means of a central vertical spindle or respective parallel spindles that did not offer the required precision.

Moreover, machines of this type hitherto known use, in order to lubricate the tool and the workpiece, a lubricant consisting of a cutting oil that stains both the workpiece and the machine and even the surroundings thereof, requiring complex and slow washing tasks from time to time.

The use of this liquid lubricant entails the need for a large lubricant tank, given the high lubricant flow required in the machining phase.

Furthermore, these machines, due to the power required, had been using, as a usual solution to move the workpiece-carrier carriage, hydraulic groups which further required large tanks for the hydraulic fluid.

All this translated into less ecological working and maintenance conditions.

Lastly, in the broaching machines hitherto known, when machining workpieces of great length, it was necessary to install the broaching machine in a pit, with all the drawbacks that this entails (need for civil works).

### Object of the invention

In order to solve the aforementioned technical problems and further provide additional advantages that may be derived later, the object of the present invention is an outer surface broaching machine, with a fixed tool that incorporates a novel solution for driving and guiding the workpiece-carrier carriage such that the position thereof in a horizontal plane is guaranteed, with the two ends of the carriage at the same and very precise height dimension. Furthermore, this broaching machine provides solutions in order to offer a much more ecological work and maintenance process than that of the hitherto known embodiments. Moreover, this broaching machine does not require the installation of the machine in a pit for broaching workpieces, such as the steering rack of a vehicle.

In order to do this, the broaching machine object of the present invention has a workpiece-carrier carriage the sides of which have respective servomotors coupled thereto, for each one of them to drive a rack and pinion transmission.

On each side of the column of the machine, in addition to the racks, two linear capturing rulers are arranged that allow giving conformity to the height dimension of each end of the carriage, according to the position selected by the operator in the corresponding panel of the control cabinet of the machine, keeping the position of the carriage completely balanced and guaranteeing total precision in the coincidence of the height dimension of the two ends of the carriage; so that these linear capturing rulers close the position loop of the carriage with total precision. With this, the precision of the machining carried out with this machine is improved.

In addition, the machine incorporates a vertical guide system for the workpiece-carrier carriage consisting of a pair of linear guides, acting as rails for the carriage, and the corresponding skates attached to the workpiece-carrier carriage.

Moreover, the machine incorporates a precision micro-lubrication system that provides the workpiece and the tool with an atomised mixture of pressurised air and lubricating liquid, which greatly reduces lubricant consumption and improves the cleaning conditions of the machine, the workpiece and the environment.

This micro lubrication, together with the fact that hydraulic groups are not used to move the workpiece-carrier carriage and replacing them with electric servomotors, enables this broaching machine to provide much more ecological working conditions, energy savings, minimising polluting waste and therefore the elimination of the recycling thereof with the consequent reduction of the environmental impact.

The workpiece-carrier carriage is connected counterbalanced, by means of chains, cables or similar means, with a counterweight arranged at the rear portion of the machine that compensates for the weight of the workpiece-carrier carriage and the tooling workpieces that are mounted on it, such that if the drive means of the carriage were not operating, the carriage would remain, simply by the weight of the counterweight itself, in a stable position in height, balanced between the carriage and the counterweight. In this way, during the machining phase, practically all the power of the servomotors can be used for machining work.

Notwithstanding the foregoing, the machine incorporates a safety brake that, together with the servomotors' own brakes, block the workpiece-carrier carriage on the rails thereof formed by the linear guides, in the event of an anomaly.

This broaching machine is ideal for machining workpieces without having to resort to mounting the machine in a pit, such as the steering rack of a vehicle or other workpieces such as brake fork, bearing caps, turbine discs also within the automotive sector, or workpieces from other fields such as the turbine disc in the field of the aeronautical or energy sector.

### Description of the figures

Figure 1 shows a schematic and perspective view of a broaching machine according to the invention and represented according to a non-limiting example of a practical embodiment, wherein it does not incorporate the corresponding tool or broach (7).

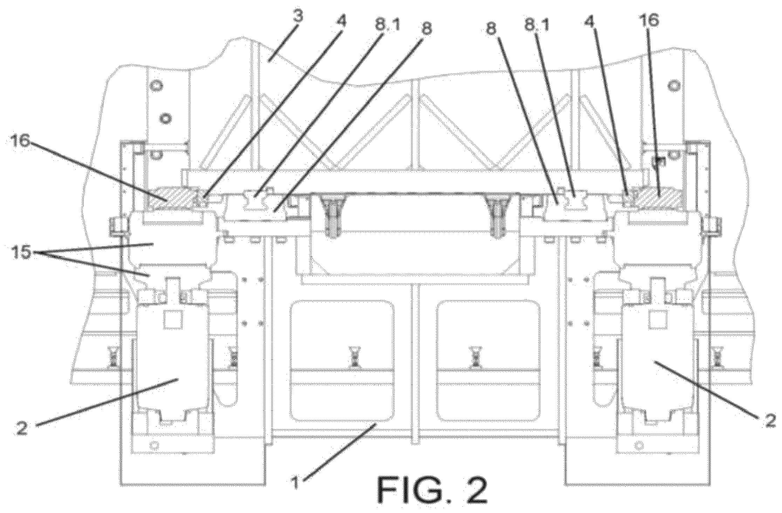

Figure 2 shows a partial cross-sectional view of Figure 1 given by the horizontal plane II-II indicated in Figure 1.

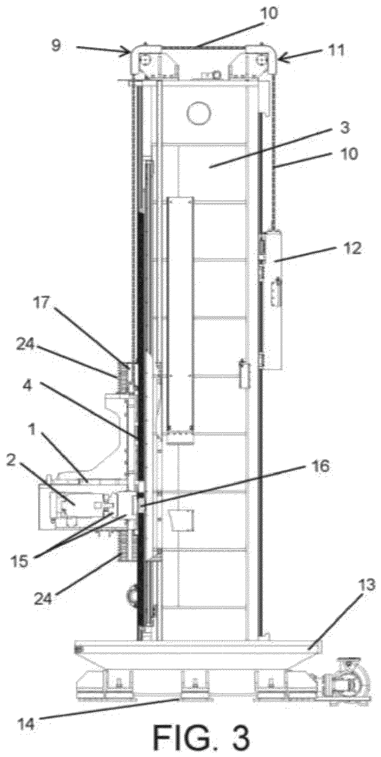

Figure 3 shows a cross-sectional view given by the vertical plane III-III indicated in Figure 1.

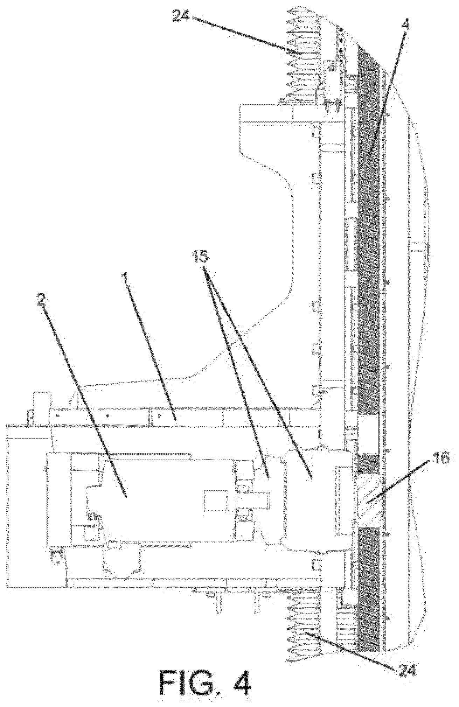

Figure 4 is an enlarged detail of Figure 3 corresponding to the area of the servomotor (2).
Figure 5 is a view like that of Figure 1, but now with the tool (7) mounted on the column (3), with a workpiece-carrier tooling (18) mounted on the carriage (1) and with the workpiece (20) arranged in that tooling (18). In this view, one of the bellows (24) has been removed to better see one of the brakes (17).
Figure 6 is a partial cross-sectional view given according to the horizontal plane VI-VI indicated in Figure 5, this plane coinciding with the median plane of the servomotors (2).

### Detailed description of the invention

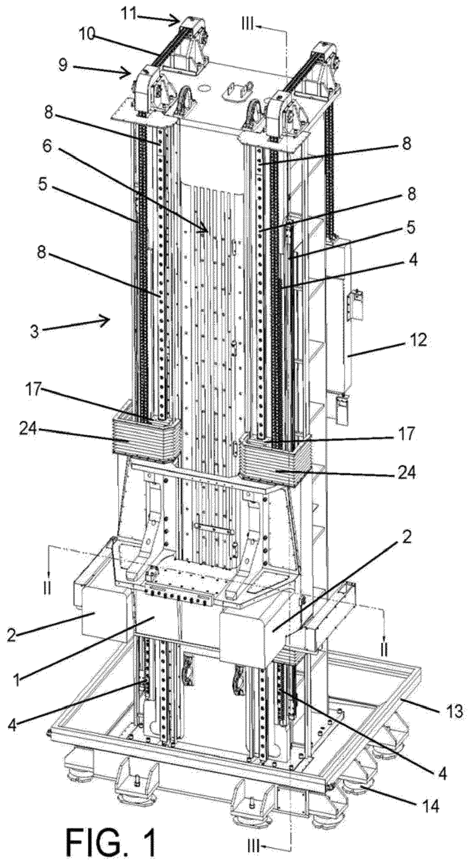

The present invention relates to an outer surface broaching machine, with a fixed tool (7) which, as shown in figure 1, consists of a base (13), with antivibration supports (14) for support on the floor, the column (3) of the machine being mounted on the base (13).

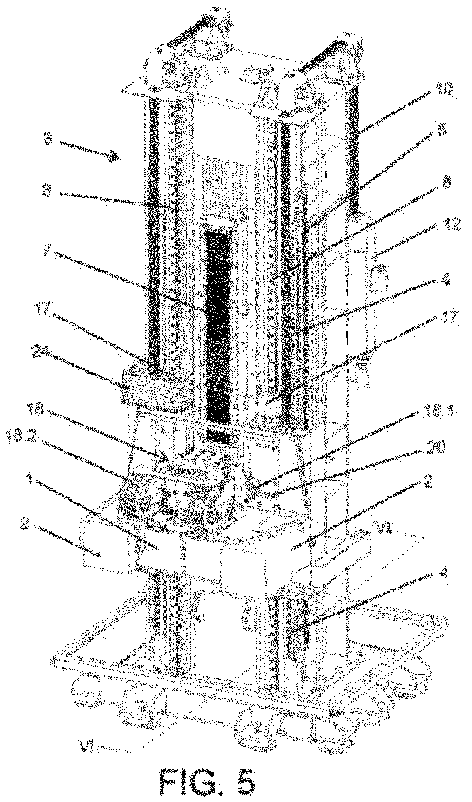

A centred area (6) is defined in the column (3) along the front face thereof, which is where the corresponding tool (7) is fixedly mounted, in this case consisting of a broach with several sections, see Figure 5.

According to the invention, a workpiece-carrier carriage (1) is arranged in the column (3), wherein the workpiece represented in Figure 5 and identified with the numerical reference (20) is mounted. The workpiece (20) which in the non-limiting example represented in Figure 5 is the steering bar of a vehicle, can be directly arranged on the carriage (1); or on a tool or device mounted on the carriage (1), such as a dividing plate or a tooling. Figure 5 shows a tooling (18) wherein the workpiece (20) is arranged.

The carriage (1) is arranged according to a horizontal plane and, in relation to the ends thereof, a pair of servomotors (2) is mounted. Each servomotor (2), by means of a reducer (15), can give movement to a pinion (16) meshed in a vertical rack (4), which is fixed to the column (3). In this way, by means of the rack (4) and pinion (16) transmission and when the servomotors (2) are actuated, the carriage (1) can move vertically, along the column (3), in one direction or the other.

Two linear guides are further arranged (8) in the column (3) that extend vertically and parallel to each other. Skates (8.1) are integral to the carriage (1) which are coupled to the linear guides (8), such that the latter fulfil the function of rails for the carriage (1) which, when the servomotors (2) are actuated, can thus move properly guided along the linear guides (8).

The servomotors (2), the rack (4) and pinion (16) transmission and the guidance of the linear guides (8) ensure that the movements of the carriage (1) are carried out with great precision, both servomotors (2) synchronising so that the carriage (1) moves maintaining perfect horizontality, with the ends thereof at the same height dimension with respect to the ground.

Next to the racks (4) are arranged, also vertically fixed to the column (3), two linear capturing rulers (5), one for each end of the carriage (1) that allow conformity to be given to the height dimension of each end of the carriage (1), according to the position selected by the operator in the corresponding panel of the control cabinet of the machine, keeping the position of the carriage (1) totally balanced and guaranteeing total precision in the coincidence of the height dimension of the two ends of the carriage (1), such that these linear capturing rulers (5) close, with total precision, the position loop of the carriage (1).

Respective chains (10) are hooked to the carriage (1) by one of the ends thereof, which may also be cables or any other conventional element that allows them to fulfil the function thereof. Each chain (10) runs along the column (3) until reaching the upper end thereof wherein they pass through two free-rotating pinions arranged inside respective housings (9 and 11), to finally descend through the rear portion of the column (3) and joining a counterweight (12).

These vertical elements are covered by respective protection bellows (24) that are arranged above and below the carriage (1).

The counterweight (12) compensates the weight of the carriage (1) and of the clamping tool of the workpiece arranged on it, such that if the carriage (1) were free, that is, if the servomotors (2) were not operating, the carriage (1) would remain, simply by the weight of the counterweight (12) itself, in a stable position in height, balanced between the carriage (1) and the counterweight (12). In this way, during the machining phase, practically all the power of the servomotors (2) can be used for the machining work.

The servomotors (2) have their own braking system, but the machine further incorporates safety brakes (17) which, together with the servomotors' (2) own brakes, block the workpiece-carrier carriage (1) on the rails thereof formed by the linear guides (8), in the event of an anomaly.

The safety brakes (17) are mounted, like the skates (8.1), on the guides (8), one for each guide (8) as shown in Figure 5.

Furthermore, the incorporation, in the area of the carriage (1), of a micro-lubrication system is envisaged that provides the tool (7) with an atomised mixture of pressurised air and lubricating liquid, through one or more spray nozzles (19), which greatly reduces lubricant consumption and improves the cleaning conditions of the machine, the workpiece and the environment.

This micro lubrication, together with the fact that hydraulic groups are not used to move the workpiece-carrier carriage (1) and replacing them with electric servomotors (2) allows this broaching machine to provide much more ecological working and maintenance conditions than those that were hitherto reached.

As shown in Figure 5, the tooling (18) wherein the workpiece (20) is mounted incorporates a mouth (18.1), for mounting the workpiece (20) therein, and is provided with the corresponding cable-carrier chains (18.2).

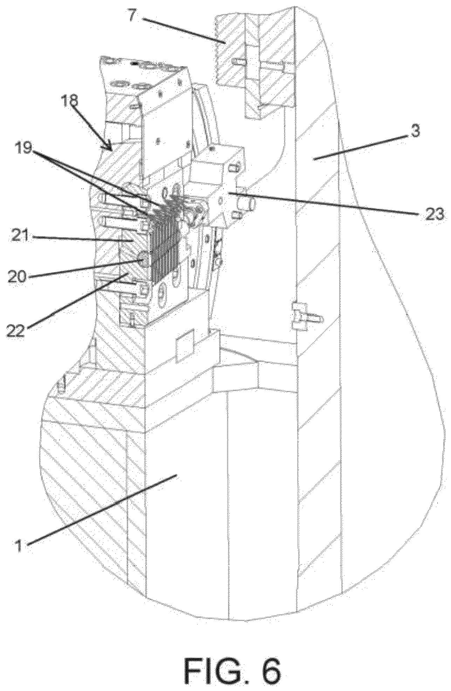

Figure 6 shows how the workpiece (20) is arranged between an upper clamp (21) and a lower clamp (22), both part of the tooling (18). It also shows how in this case and according to a non-limiting exemplary practical embodiment, the nozzles (19) for micro-spraying the lubricant are arranged in relation to the upper clamp (21), but could be arranged in the lower clamp (22) or in both without altering the object of the invention. Furthermore, this represented solution corresponds to the specific embodiment of the tooling (18) shown in Figures 5 and 6, but depending on how this tooling or the mounting means of the workpiece (20) are, the spray nozzles (19) will be located in the most convenient place to spray the lubricant along the tool (7) in the movement of the carriage (1) during the work phase. Similarly, the number of the spray nozzles (19) may vary, without that altering the object of the invention.

This figure 6 equally shows how the tooling (18) incorporates a stop (23) for the workpiece (20). This stop (23) can slide along an arched track and be fixed in one or another angular position along the same, to serve as a stop for the workpiece (20), when it must be arranged according to a position with certain inclination with respect to the horizontal plane.

## Claims

1. An outer surface broaching machine, with a fixed tool, of the type exhibiting a workpiece-carrier carriage that can move along a column wherein the machine tool is fixed, **characterised in that** at each end of the workpiece-carrier carriage (1) a servomotor (2) is arranged that by means of a reducer (15) can transmit the rotational movement in both directions to a pinion (16) meshed in a rack (4) arranged along the column (3) of the machine; and **in that** the workpiece-carrier carriage (1) incorporates skates (8.1) coupled to linear guides (8) equally mounted along the column (3); such that the synchronised actuation of both servomotors (2) establishes the horizontal movement of the carriage (1), with the ends thereof at the same height dimension with respect to the ground.

2. The outer surface broaching machine, with fixed tool, in total accordance with the preceding claim, **characterised in that** paraxial to the racks (4) and linear guides (8), two linear capturing rulers (5) are arranged, each one related to one end of the carriage (1); these linear capturing rulers (5) give the conformity to the height dimension of each end of the carriage (1), according to the selected position, to close with precision the position loop of the carriage (1).

3. The outer surface broaching machine, with a fixed tool, in total accordance with the first claim, **characterised in that** the ends of elements (10), formed by a chain or cable, are attached to the carriage (1) which, at the other end thereof, are attached to a counterweight (12) that is arranged at the rear portion of the column (3).

4. The outer surface broaching machine, a with fixed tool, in total accordance with the first claim, **characterised in that** it incorporates a micro-lubrication system that, by means of at least one nozzle (19), sprays a mixture of liquid lubricant and pressurised air on the tool (7).

5. The outer surface broaching machine, with a fixed tool, in total accordance with the first claim, **characterised in that** each linear guide (8) incorporates a safety brake (17) that, together with the servomotors' (2) own brakes, can block the workpiece-carrier carriage (1) on the rails thereof formed by the linear guides (8).
